# EUROPEAN PATENT APPLICATION

(11) **EP 2 800 257 A1**
(43) Date of publication of application: **05.11.2014**
(21) Application number: 12861082.1
(22) Date of filing: 09.08.2012
(51) Int. Cl.: H02K 21/24, H02K 3/24, H02K 16/02

(54) **ELECTROMAGNETIC GENERATOR**

(30) Priority: 26.12.2011 RU 2011153402
(71) Applicant: Esakov, Sergej Mikhailovich, St.Petersburg 198510 (RU); Esakov, Mikhail Sergeevich, St.Petersburg 191144 (RU)
(72) Inventor: VELIKO-IVANENKO, Anatolij Yurievich, St.Petersburg 198328 (RU)
(74) Representative: Gulde & Partner
(86) International application number: PCT/RU2012/000655
(87) International publication number: WO 2013/100803

(57) **Abstract**

The invention relates to the field of electrical engineering, specifically to low-speed electrical generators, and can be used in particular in wind energy installations. In an electromagnetic generator having a rotor which is equipped with permanent magnets and a stator which comprises two parallel laminations 5, 6, between which annular windings 7 are arranged which are in the form of isosceles trapezoids having lateral sides 8, 9 that are arranged radially relative to the axis of rotation of the rotor, with sections 11, 12 of the annular windings in the bases of the trapezoids having a convex curvature, the rotor is formed from two parallel discs 1, 2 to a shaft 10, with ring-shaped rows of permanent magnets 3, 4 being arranged on each of said discs on surfaces facing one another, the polarity of said permanent magnets in each row alternating, wherein the poles of the permanent magnets in one row are turned towards the opposite poles of the permanent magnets in the other row, the annular windings are inserted one inside the other so as to form a module, wherein the distance *l* between the sections of the annular windings in the bases of the trapezoids exceeds the width *b* of the ring-shaped row of permanent magnets, and an additional planar annular winding 13 in the form of an isosceles trapezoid having lateral sides 14, which are arranged in one plane between the lateral sides of the other annular windings, is arranged between the annular windings. This provides the possibility of producing three-phase electrical current.

## Description

### Technical field

The invention relates to the field of electrical engineering, specifically to low-speed electrical generators, and can be used in particular in wind energy installations.

### Background art

A low-speed electromagnetic generator is known from the prior art, which comprises a ring-shaped row of stator windings on iron cores made of iron sheets or compressed iron powder and a matching ring-shaped row of permanent rotor magnets, in particular a synchronous machine with permanent magnetization for sinusoidal voltage, wherein the windings are concentrated instead of being distributed in the slots, the cores with windings are alternated with iron cores without windings so that every second iron core has a winding, the number of gaps between cores is different from the number of poles, wherein the number *s* of gaps between the cores and the number p of poles correspond to the formulas |s-p| = 2•m and s = 12•n•m, where *n* and *m* are positive integers, wherein the machine is designed for three-phase voltage with series connection of adjacent coils in order to obtain *m* such groups per phase that can be connected either in series or in parallel, RU 2234788 C2.

The disadvantage of said generator consists in its low efficiency (low energy conversion efficiency), because the windings in the ring-shaped row are positioned at a great distance from each other and no electromotive force (emf) is induced therein when the magnets are located in the gap between the windings.

Another known electromagnetic generator includes a rotor equipped with permanent magnets and a stator that comprises two parallel laminations in the form of interconnected disks with windings arranged therebetween; the stator has magnetic cores in the form of flat rings, RU 2168062 C1.

This technical solution has the same disadvantage as the abovementioned analogous solution (RU 2234788 C2), namely its low energy conversion efficiency, which has the same cause. In addition, when the permanent magnets of the rotor pass over the cores of stator windings, the permanent rotor magnets and the cores of stator windings become attracted to each other (the so-called rotor sticking effect), which hinders the start of the generator and produces intense noise during its operation.

Increased energy conversion efficiency of the generator, decreased starting torque and reduced noise level during operation are achieved in an electromagnetic generator that includes a rotor equipped with permanent magnets and a stator comprising two parallel laminations, between which annular windings are arranged that are in the form of isosceles trapezoids having lateral sides which are arranged radially relative to the axis of rotation of the rotor, with sections of the annular windings in the bases of the trapezoids having a convex curvature; the rotor is formed from two parallel discs fixed to a shaft, with ring-shaped rows of permanent magnets being arranged on each of said discs on surfaces facing one another, the polarity of said permanent magnets in each row alternating, wherein the poles of the permanent magnets in one row are turned towards the opposite poles of the permanent magnets in the other row, the annular windings are inserted one inside the other, and wherein the distance between the sections of the annular windings in the bases of the trapezoids exceeds the width *b* of the ring-shaped row of permanent magnets, RU 2427067 C1.

This device has been taken as a prototype of the present invention. This generator can be used for supplying power mainly to household single-phase equipment, because it produces two-phase electric current.

The disadvantage of the prototype consists in that without additional utilities it cannot be used for supplying power to three-phase load and cannot be connected to central (three-phase) electrical grids.

### Summary of the invention

It is an object of the present invention to provide the possibility of producing three-phase electrical current.

According to the invention in an electromagnetic generator having a rotor equipped with permanent magnets and a stator that comprises two parallel laminations, between which annular windings are arranged that are in the form of isosceles trapezoids having lateral sides which are arranged radially relative to the axis of rotation of the rotor, with sections of the annular windings in the bases of the trapezoids having a convex curvature, the rotor is formed from two parallel discs fixed to a shaft, with ring-shaped rows of permanent magnets being arranged on each of said discs on surfaces facing one another, the polarity of said permanent magnets in each row alternating, wherein the poles of the permanent magnets in one row are turned towards the opposite poles of the permanent magnets in the other row, the annular windings are inserted one inside the other so as to form a module, wherein the distance *l* between the sections of the annular windings in the bases of the trapezoids exceeds the width *b* of the ring-shaped row of permanent magnets, and an additional planar annular winding in the form of an isosceles trapezoid having lateral sides which are arranged in one plane between the lateral sides of the other annular windings is arranged between the annular windings.

The applicant has not found any sources of information containing data on technical solutions identical to the present invention, which enables to conclude that the invention conforms to the criterion "novelty" (N).

Implementation of the features of the invention provides the electromagnetic generator with an important new property, namely the possibility of producing three-phase electrical current.

The applicant has not found any sources of information containing data on the influence of the features of the invention on the technical result produced by the invention. In applicant's opinion, the abovementioned new property enables to conclude that the invention conforms to the criterion "Inventive Step" (IS).

### Brief description of the drawings

The invention is further explained, by way of example, with reference to the following drawings, in which:
- Figure 1: - a side view; an embodiment with permanent magnets having rectangular shape;
- Figure 2: - A-A section of Figure 1;
- Figure 3: - a side view; an embodiment with permanent magnets having trapezoidal shape;
- Figure 4: - B-B section of Figure 3;
- Figure 5: - adjacent annular windings coupled with each other (a module), shown in an axonometric projection;
- Figure 6: - adjacent annular windings (a module), shown in plan view;
- Figure 7: - C-C section of Figure 6.

### Preferred embodiment

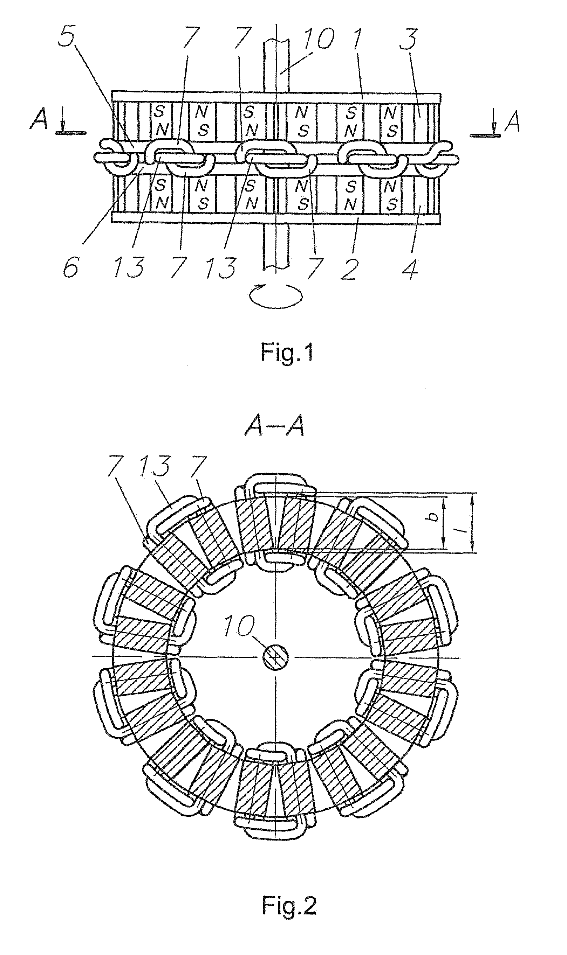

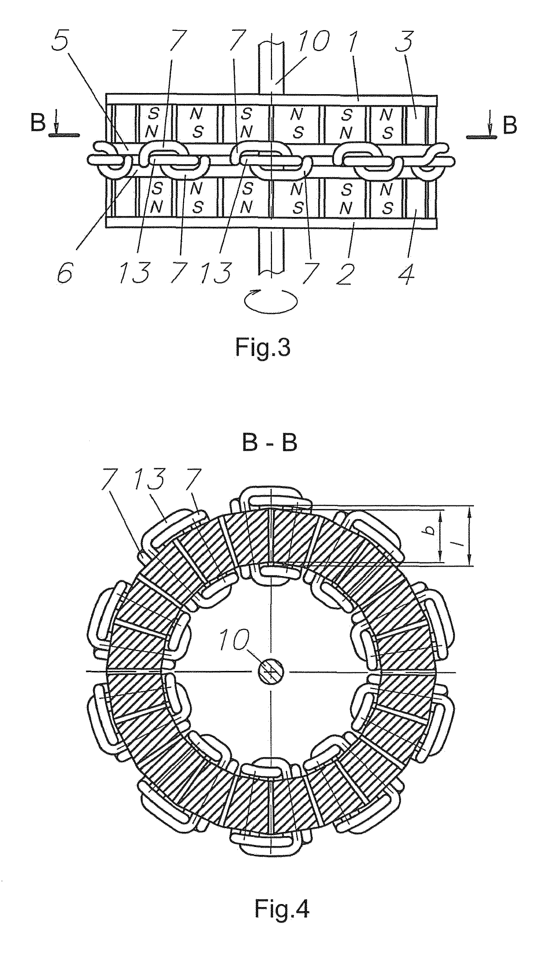

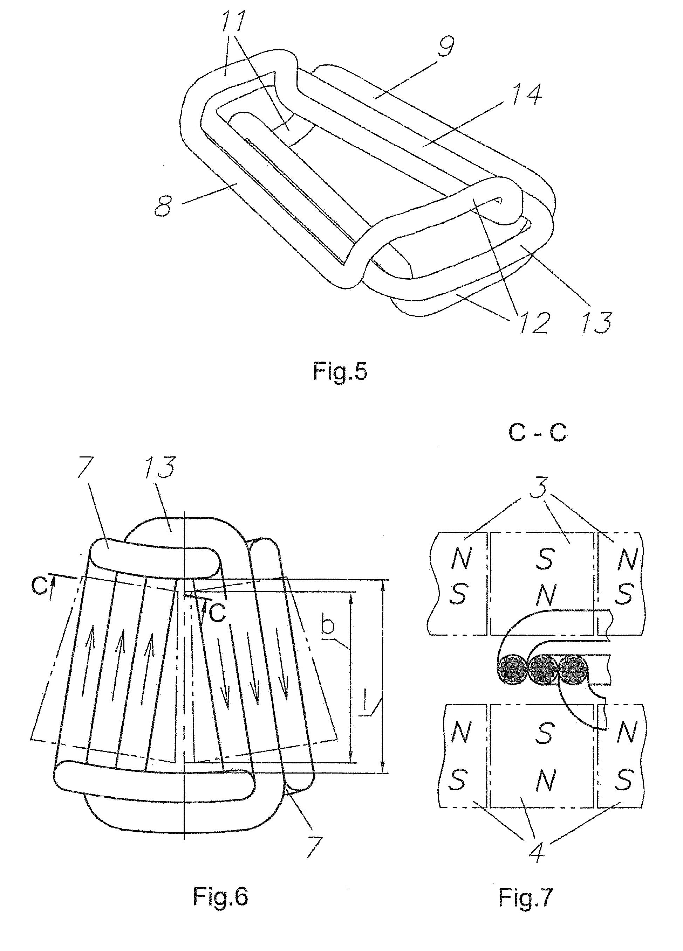

The rotor of the electromagnetic generator is formed from two parallel disks 1, 2 fixed to a shaft 10. In this particular embodiment the disks 1, 2 are made of electrical steel. Ring-shaped rows of permanent magnets 3, 4 are arranged on said parallel disks 1, 2, respectively, on surfaces facing one another. In each ring-shaped row the magnets are coupled with each other with a gap of 0.1-0.2 mm. In the embodiment shown in Figures 1 and 2 the permanent magnets 3, 4 are in the form of rectangles and adjoin one another by the angles thereof with the abovementioned gap. In the embodiment shown in Figures 3 and 4 the permanent magnets 3, 4 are in the form of trapezoids and adjoin one another by the adjacent lateral planes thereof. In the embodiment shown in Figures 1 and 2 relatively small triangular gaps are left between the permanent magnets 3, 4. The gaps (clearances) between the magnets are filled with epoxide compound. The polarity of the permanent magnets 3, 4 alternates in each row, while the poles of the permanent magnets 3, 4 in one row are turned towards the opposite poles of the permanent magnets 3, 4 in the other row. The stator of the electromagnetic generator comprises two parallel laminations 5, 6, between which annular windings 7 in the form of isosceles trapezoids are arranged. The lateral sides 8, 9 of the windings 7 are arranged radially relative to the longitudinal axis of rotation of the rotor, and the sections 11, 12 of the windings 7 in the bases of the trapezoids have a convex curvature (see Figure 5). The annular windings 7 are inserted one inside the other, while an additional planar annular winding 13 is arranged therebetween in the form of an isosceles trapezoid in such way that the lateral sides 14 of the additional planar annular winding 13 are arranged in one plane with the lateral sides 8, 9 of the annular windings 7. The distance *l* between the sections 11, 12 of the windings 7 exceeds the width *b* of the ring-shaped row of permanent magnets 3, 4 (see Figures 2, 4 and 6). The upper-located windings 7 are fixed to the lamination 5 and the lower windings 7 are to the lamination 6. The windings 7 and 13 are filled with epoxide compound that rigidly joins them in a single module (see Figures 5 and 6).

The electromagnetic generator functions in the following way. When the rotor and the shaft 10 rotate, the magnetic field lines of the permanent magnets, 3, 4 cross the turns of the annular windings 7 and 13 and induce emf in said windings 7 and 13. Since the lateral sides 8, 9 of the annular windings 7 and the lateral sides 14 of the windings 13 are positioned between the poles of magnets 3, 4 with different polarity, differently directed emf is induced in the lateral sides 8, 9 of the windings 7 and the lateral sides 14 of the windings 13 (shown with arrows in Figure 6). Therefore, a ring electric current flows in each winding 7 and winding 13. The windings 7 that are fixed to the plate 5 are electrically connected to each other, and the windings 7 that are fixed to the plate 6, as well as the windings 13, are similarly connected to each other.

Since the additional winding 13 is planar, it becomes structurally possible to arrange its lateral sides in one plane between the lateral sides of the windings 7, which allows rotation of the generator's rotor in the presence of three windings, with the generator producing three-phase electrical current. The currents in the windings are phase-shifted by the same value, because the lateral sides of the windings are adjacent to each other (without taking into account the gap). Since the conductors of the windings 7 and 13 uniformly fill the gap between the moving magnets 3, 4, creating a uniform medium for the moving magnets 3, 4, there are no rotor sticking problems, which ultimately ensures quiet and smooth operation of the generator.

### Industrial applicability

The inventive device can be manufactured by means of common constructional materials and factory equipment. In applicant's opinion, this enables to conclude that the invention conforms to the criterion "Industrial Applicability" (IA).

## Claims

1. n electromagnetic generator having a rotor equipped with permanent magnets and a stator that comprises two parallel laminations, between which annular windings are arranged that are in the form of isosceles trapezoids having lateral sides which are arranged radially relative to the axis of rotation of the rotor, with sections of the annular windings in the bases of the trapezoids having a convex curvature, wherein the rotor is formed from two parallel discs fixed to a shaft, with ring-shaped rows of permanent magnets being arranged on each of said discs on surfaces facing one another, the polarity of said permanent magnets in each row alternating, wherein the poles of the permanent magnets in one row are turned towards the opposite poles of the permanent magnets in the other row, the annular windings are inserted one inside the other so as to form a module, wherein the distance *l* between the sections of the annular windings in the bases of the trapezoids exceeds the width *b* of the ring-shaped row of permanent magnets, **characterized in that** an additional planar annular winding in the form of an isosceles trapezoid having lateral sides which are arranged in one plane between the lateral sides of the other annular windings is arranged between the annular windings.
